# FASCICULE DE BREVET EUROPEEN

(11) **EP 0 767 050 B1**
(45) Date de publication et mention de la délivrance du brevet: **19.01.2000**
(21) Numéro de dépôt: 96114614.9
(22) Date de dépôt: 12.09.1996
(51) Int. Cl.: B29D 30/06, B29C 43/54

(54) **Moule pour pneumatique à pression interne controlée**
Reifenform mit kontrollierbarem Innendruck
Tyre mould having controlled internal pressure

(30) Priorité: 26.09.1995 FR 9511364
(43) Date de publication de la demande: 09.04.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Pouille, Guy, 63000 Clermont-Ferrand (FR); Ravel, Bernard, 63830 Nohanent (FR)
(74) Mandataire: Bauvir, Jacques

(56) Documents cités:
- EP-A- 0 320 588
- DE-A- 4 301 348
- DE-A- 4 439 180
- FR-A- 2 306 070
- US-A- 3 922 122

## Description

L'invention concerne un moule de fabrication de pneumatiques ou de bandes de roulement annulaires pour le rechapage de pneumatiques.

De tels moules ont des conceptions très proches. La principale différence est l'absence des coquilles latérales destinées à mouler les flancs des pneumatiques. En revanche, on retrouve dans les deux applications une couronne périphérique de secteurs pour mouler la bande de roulement et une membrane ou un noyau rigide pour mouler la semelle intérieure de la bande de roulement.

L'emploi d'un noyau rigide est décrit, par exemple, dans la demande EP 242 840. La conception totalement rigide de ce moule pour pneumatiques apporte de nombreux avantages quant à la qualité du pneumatique moulé car les formes géométriques obtenues sont d'une grande qualité (excellente circularité, en toute position transversale). Cependant, le moulage à volume imposé oblige à respecter des tolérances très étroites sur le volume de l'ébauche crue du pneumatique. D'autre part, la dilatation du caoutchouc due à l'augmentation de température peut entraîner, dans un moule totalement rigide, de très fortes augmentations de pressions susceptibles d'endommager certaines parties du moule.

L'augmentation de pression interne due à la dilatation du caoutchouc peut aussi être dommageable lors d'un moulage de la cavité interne du moule par une membrane. C'est notamment le cas lorsque les volumes de caoutchouc sont très importants comme pour des pneumatiques génie civils ou agricoles. La dilatation du caoutchouc de la bande de roulement peut amener la pression au-delà de la pression de moulage de la membrane, les nappes du bloc sommet du pneumatique sont alors mises en compression et il peut en résulter des dommages tels des cabossages.

L'objectif de l'invention est donc de pouvoir simplement maîtriser l'augmentation de pression dans la cavité interne du moule.

Le moule de la présente invention permet d'atteindre cet objectif. Il peut se révéler utile, que le moulage soit réalisé avec une membrane ou sur un noyau rigide.

Le moule pour pneumatique ou pour bande de roulement annulaire de pneumatique selon l'invention, comporte une pluralité de secteurs mobiles radialement pour le moulage de l'extérieur de la bande de roulement, la fermeture desdits secteurs étant assurée par le déplacement axial d'une couronne venant agir sur des portées tronconiques desdits secteurs placées radialement extérieurement, ainsi que, pour permettre le recul des secteurs à partir de leur position de fermeture dans le moule, au moins un élément annulaire, intermédiaire entre les secteurs et la couronne, qui comporte une première surface d'appui, tronconique, radialement intérieure, destinée à venir s'appliquer lors de la fermeture du moule contre les portées des secteurs avec un engagement coinçant et une seconde surface d'appui, tronconique, radialement extérieure, destinée à supporter l'appui d'une surface correspondante de la couronne avec un engagement non coinçant, ladite couronne étant en appui avec une force axiale contrôlée.

Suivant un mode de réalisation préférentiel, l'élément annulaire comporte en plus une troisième surface d'appui destinée à s'adapter contre une surface correspondante de la couronne pour bloquer les déplacements axiaux relatifs entre l'élément annulaire et la couronne lors de la fermeture du moule.

L'élément annulaire mis en place radialement extérieurement relativement aux portées des secteurs s'oppose à leur recul par sa propre résistance à la dilatation circonférentielle ainsi que par l'arc-boutage de la couronne contre la seconde surface d'appui. Mais, au-delà d'une valeur donnée de pression interne dans la cavité du moule, comme l'engagement entre la seconde surface d'appui de l'élément annulaire et la surface correspondante de la couronne est non coinçant, les efforts de dilatation subis par l'élément annulaire vont entraîner le recul axial de la couronne accompagné d'une dilatation circonférentielle de l'élément annulaire et d'un recul radial des secteurs.

Le niveau de pression à partir duquel on obtient un recul axial de la couronne est contrôlé par le niveau d'effort axial appliqué sur la couronne.

De façon préférentielle, le moule selon l'invention est tel que le moulage de la semelle radialement intérieure du pneumatique ou de la bande de roulement annulaire pour pneumatique se fait sur un noyau rigide.

L'invention a aussi pour objet un procédé de fabrication d'un pneumatique ou d'une bande de roulement de pneumatique, tel que l'on utilise un moule comportant un élément annulaire, intermédiaire entre la couronne et les secteurs, pour permettre le recul des secteurs à partir de leur position de fermeture lorsque la pression interne dans la cavité du moule dépasse une valeur donnée.

Les figures suivantes illustrent un mode de réalisation de l'invention et permettent d'en saisir tous les avantages :
- la figure 1 est une coupe méridienne d'un moule selon l'invention ;
- la figure 2 est un détail de la figure 1 présentant un second mode de réalisation d'un élément annulaire.

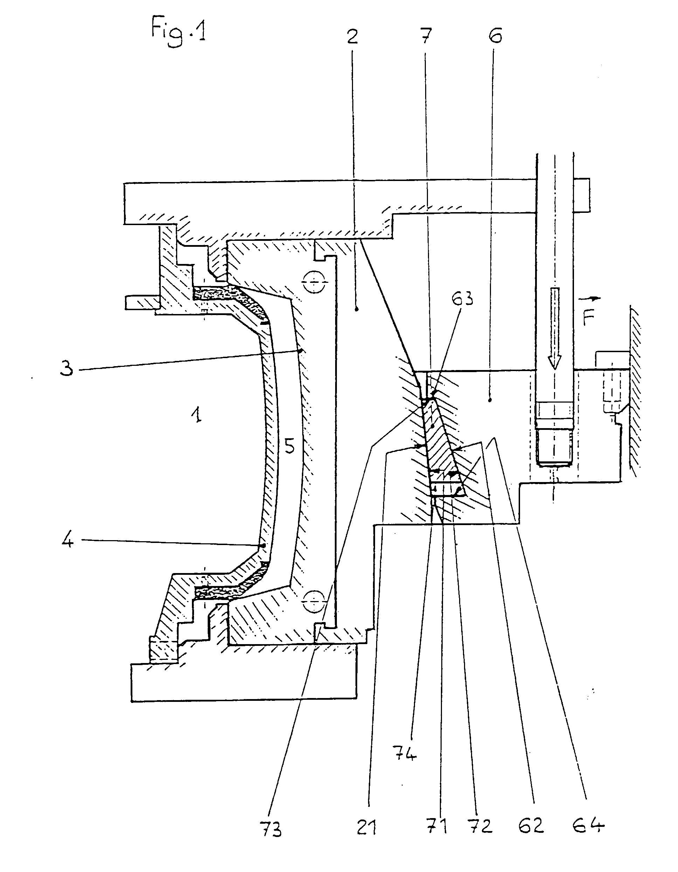

La figure 1 présente une coupe méridienne schématique d'un moule 1 pour bande de roulement annulaire selon l'invention.

Ce moule comprend des secteurs 2 avec des éléments de moulage 3 de la surface radialement extérieure de la bande de roulement annulaire, et un noyau rigide métallique 4. L'ensemble du noyau 4 et des éléments de moulage 3 définit la cavité interne 5 du moule 1.

Une couronne 6 radialement extérieure par rapport aux secteurs 2 et à déplacement axial assure la fermeture des secteurs 2 en venant engager une portée tronconique 21 radialement à l'extérieur des secteurs 2 par l'intermédiaire d'un élément annulaire 7. Cet élément annulaire 7 engage les secteurs 2 du côté radialement interne et une partie interne de la couronne 6 du côté radialement extérieur. Le déplacement de la couronne 6 est réalisé, par exemple, au moyen d'un vérin (non représenté) avec une force d'application F réglable.

L'élément annulaire 7 a une section droite généralement trapézoïdale. Il comprend :
- une première surface d'appui tronconique 71, radialement intérieure, destinée à engager les portées tronconiques 21 correspondantes du secteur 2 ; l'angle d'inclinaison de ces portées tronconiques est tel que l'engagement est coinçant, par exemple de l'ordre de 5 à 6 degrés ;
- une seconde surface d'appui tronconique 72, radialement extérieure, destinée à venir engager une surface tronconique 62 correspondante de la couronne 6 ; l'angle d'inclinaison de cette seconde surface d'appui tronconique 72 et de la surface correspondante 62 est tel que l'engagement entre ces deux surfaces n'est pas coinçant, par exemple supérieur à 16 degrés ;
- une troisième surface d'appui 73, sensiblement perpendiculaire à l'axe du moule, destinée à s'adapter sur une surface correspondante 63 de la couronne 6 ; ces deux surfaces 73 et 63 limitent les déplacements axiaux relatifs entre l'élément annulaire 7 et la couronne 6; et
- une quatrième surface d'appui 74, sensiblement perpendiculaire à l'axe du moule, sur laquelle vient prendre appui une surface correspondante 64 de la couronne 6 pour assurer le retrait de l'élément annulaire 7 à l'ouverture du moule 1.

Le fonctionnement du moule est le suivant. Après avoir mis en place dans la cavité 5 la bande de roulement annulaire non vulcanisée, on ferme le moule 1 par un déplacement axial progressif d'avance de la couronne 6 dû à l'augmentation progressive de l'effort de fermeture F. L'élément annulaire 7 est alors en appui sur la couronne 6 par ses seconde 72 et troisième 73 surfaces d'appui. La première surface d'appui 71 de l'élément annulaire 7 engage progressivement les portées tronconiques 21 des secteurs 2 ce qui, de façon usuelle, entraîne la fermeture des secteurs 2 et ainsi de la cavité 5 du moule 1.

Après la fermeture du moule, la température du caoutchouc évolue de 20°C environ jusqu'à la température de vulcanisation qui peut être de l'ordre de 160°C. La différence de température peut ainsi atteindre 140°C. Le volume de caoutchouc dans la cavité ayant été déterminé pour correspondre sensiblement à celui de la cavité, la dilatation de volume du caoutchouc va entraîner une augmentation progressive de pression interne dans la cavité 5 du moule 1. Cette augmentation va entraîner une augmentation correspondante des efforts d'extension radiale sur les secteurs 2 et ainsi des efforts d'extension circonférentielle sur la couronne 6 via l'élément annulaire 7. Au-delà d'un seuil de pression donné, comme l'engagement entre la seconde surface d'appui 72 de l'élément annulaire 7 et la surface correspondante 62 de la couronne 6 est non coinçant, lorsque la force de fermeture F appliquée sur la couronne 6 ainsi que les forces de frottement entre la seconde surface d'appui 72 et la surface correspondante 62 de la couronne 6 auront été surmontées, va se produire un déplacement axial de recul de la couronne 6. Ce déplacement axial de recul de la couronne 6 va supprimer l'appui entre la troisième surface d'appui 73 de l'élément annulaire 7 et la surface correspondante 63 de la couronne 6 et permettre une extension circonférentielle de l'élément annulaire 7 ainsi qu'un recul radial des secteurs 2.

Dès le premier recul axial de la couronne 6, les efforts d'arc-boutage dus à cette couronne 6 contre la seconde surface d'appui 72 de l'élément annulaire 7 n'augmentent plus et restent sensiblement constants à un niveau fonction de la force F appliquée sur la couronne 6. En conséquence, seule la raideur en extension circonférentielle de l'élément annulaire 7 s'oppose à toute nouvelle augmentation de pression interne dans la cavité 5. Précédemment, les raideurs en extension circonférentielle de l'élément annulaire 7 et de la couronne 6 s'ajoutaient pour s'opposer à tout recul radial des secteurs 2 et comme la raideur en extension circonférentielle de la couronne 6 est très élevée, on pouvait dire que tout recul radial des secteurs 2 était impossible. En revanche, après le recul axial de la couronne 6, toute dilatation ultérieure du caoutchouc dans la cavité 5 ne va entraîner qu'une faible augmentation de pression interne en raison de l'augmentation du volume de la cavité due au recul des secteurs 2.

La raideur en extension circonférentielle de l'élément annulaire 7 est choisie de telle sorte que, couplée avec des niveaux d'efforts de fermeture F usuels, l'augmentation de pression interne dans le moule 1 peut être limitée à des valeurs admissibles.

La valeur du seuil de pression interne dans la cavité 5 à partir duquel s'effectue le recul axial de la couronne 6 est réglable par le contrôle de la valeur de l'effort axial F appliqué sur la couronne 6.

Lorsque le moulage et la vulcanisation de la bande de roulement annulaire sont achevés, on ouvre la cavité du moule en reculant axialement la couronne 6, ce mouvement va entraîner le retrait de l'élément annulaire 7 grâce à la surface 64 de la couronne 6 qui vient en appui sur la surface 74 de l'élément annulaire 7. On recule aussi radialement les secteurs 2 par des moyens connus, ce qui entraîne le démoulage de la bande de roulement.

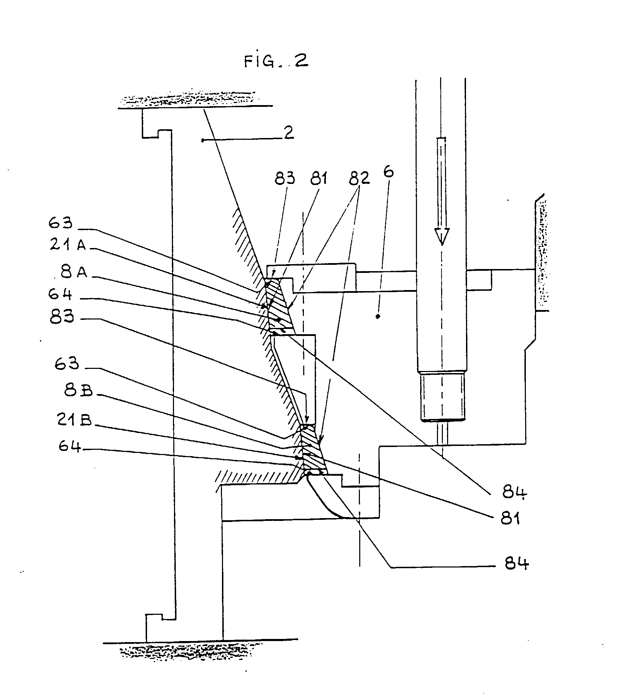

La figure 2 représente un second mode de réalisation de l'invention dans lequel les secteurs 2 sont pourvus de deux portées tronconiques 21A et 21B axialement et radialement décalées l'une de l'autre, de telle sorte que la forme générale des secteurs 2 n'est pas modifiée. La couronne 6 comprend deux logements pour recevoir un élément annulaire 8 constitué de deux anneaux 8A et 8B de sections droites sensiblement trapézoïdales. L'engagement avec les deux portées tronconiques 21A et 21B des secteurs 2 est assuré par les premières surfaces d'appui tronconiques 81 ; l'appui sur la couronne 6 est assuré par les secondes surfaces d'appui 82 et les troisièmes surfaces d'appui 83. Comme précédemment, l'angle d'inclinaison des premières surfaces d'appui est tel que l'engagement avec les portées tronconiques des secteurs est coinçant, alors que l'engagement avec la couronne 6 ne l'est pas. Lors de la fermeture du moule, l'élément annulaire 8 est en appui sur la couronne 6 par les surfaces 82 et 83, ce qui interdit pratiquement toute extension circonférentielle à cet élément annulaire 8.

Après la fermeture du moule, comme dans le cas précédent, au-delà d'un seuil de pression interne dans la cavité 5 du moule 1, on va observer un recul axial de la couronne 6 qui va supprimer les appuis entre les troisièmes surfaces d'appui 83 des éléments annulaires 8A et 8B et les surfaces correspondantes 63 de la couronne 6 et permettre une extension circonférentielle des éléments annulaires 8A et 8B ainsi qu'un recul radial des secteurs 2. Cela permet de limiter les valeurs de pression dans la cavité 5 à des valeurs admissibles.

Lors du retrait de la couronne 6, le contact entre les surfaces 74 ou 84 de l'élément annulaire 7 ou 8 et les surfaces correspondantes 64 ou 65 va débloquer l'engagement de l'élément annulaire avec les portées tronconiques 21 et ainsi assurer le retrait de l'ensemble de la couronne 6 autorisant le recul radial des secteurs 2.

Les surfaces 84 et 64 sont séparées, lorsque l'anneau annulaire 8A ou 8B est en appui sur la surface 63 de la couronne 6 par une distance suffisante compte tenu des extensions prévisibles lors du moulage.

Les deux anneaux 8A et 8B sont de préférence disposés de part et d'autre du plan de symétrie du moule 1 et ont leurs sections calculées pour équilibrer les couples de basculement des secteurs 2 lors de leur retrait radial.

## Revendications

1. Moule (1) pour pneumatique ou pour bande de roulement annulaire de pneumatique, comportant une pluralité de secteurs (2) mobiles radialement pour le moulage de l'extérieur de ladite bande de roulement, la fermeture desdits secteurs (2) étant assurée par le déplacement axial d'une couronne (6) venant agir sur des portées tronconiques (21) desdits secteurs (2) placées radialement extérieurement, et, pour permettre le recul des secteurs (2) à partir de leur position de fermeture dans le moule (1), au moins un élément annulaire (7, 8), intermédiaire entre lesdits secteurs (2) et ladite couronne (6), qui comporte une première surface d'appui (71, 81), tronconique, radialement intérieure, destinée à venir s'appliquer lors de la fermeture du moule (1) contre les portées (21) des secteurs (2) avec un engagement coinçant et une seconde surface d'appui (72, 82), tronconique, radialement extérieure, destinée à supporter l'appui d'une surface correspondante (62) de la couronne (6) avec un engagement non coinçant, ladite couronne (6) étant en appui avec une force axiale contrôlée.

2. Moule (1) pour pneumatique ou pour bande de roulement annulaire de pneumatique selon la revendication 1, tel que l'élément annulaire (7, 8) comporte en plus une troisième surface d'appui (73, 83) destinée à s'adapter contre une surface correspondante (63) de la couronne (6) pour bloquer les déplacements axiaux relatifs entre l'élément annulaire (7, 8) et la couronne (6) lors de la fermeture du moule (1).

3. Moule (1) pour pneumatique ou pour bande de roulement annulaire de pneumatique selon l'une des revendications 1 et 2, tel que la seconde surface d'appui (72, 82) de l'élément annulaire (7, 8) et la surface d'appui (62) correspondante de la couronne (6) sont tronconiques avec un angle d'inclinaison relativement à l'axe du moule de l'ordre de 16 degrés au minimum.

4. Moule (1) pour pneumatique ou pour bande de roulement annulaire de pneumatique selon l'une des revendications 1 à 3, tel que le moulage de la semelle radialement intérieure du pneumatique ou de la bande de roulement annulaire pour pneumatique se fait sur un noyau rigide (4).

5. Procédé de fabrication d'un pneumatique ou d'une bande de roulement de pneumatique, tel que l'on utilise un moule (1) selon l'une des revendications 1 à 4.

## Patentansprüche

1. Form (1) für einen Reifen oder die kreisringförmige Lauffläche eines Reifens, mit einer Mehrzahl von Sektoren (2), die zum Abformen der Außenseite der genannten Lauffläche radial beweglich sind, wobei das Schließen der genannten Sektoren (2) durch die axiale Bewegung eines Kranzes (6) sichergestellt ist, der zur Einwirkung auf kegelstumpfförmige Bereiche (21) der genannten Sektoren (2) gelangt, die radial außen liegend angeordnet sind, und, um die Rückwärtsbewegung der Sektoren (2) aus ihrer Schließlage in der Form (1) zu gestatten, mit mindestens einem kreisringförmigen Element (7,8), das zwischen den genannten Sektoren (2) und dem genannten Kranz (6) angeordnet ist, mit einer ersten Anlagefläche (71,81), die kegelstumpfförmig ist, radial außen liegt und dazu bestimmt ist, unter Klemmeingriff zur Anlage während des Schließens der Form (1) gegen Bereiche (21) der Sektoren (2) zu gelangen, sowie einer zweiten Anlagefläche (72,82), die kegelstumpfförmig ist, radial außen liegt und dazu bestimmt ist, unter nicht-klemmendem Eingriff die Abstützung einer entsprechenden Fläche (62) des Kranzes (6) abzustützen, wobei der genannte Kranz (6) mit einer axialen, gesteuerten Kraft anliegt.

2. Form (1) für einen Reifen oder die kreisringförmige Lauffläche eines Reifens nach Anspruch 1, dadurch gekennzeichnet, daß das kreisringförmige Element (7,8) außerdem eine dritte Anlagefläche (73,83) aufweist, die dazu bestimmt ist, sich an eine entsprechende Fläche (63) des Kranzes (6) anzulegen, um die axialen Relativbewegungen zwischen dem kreisringförmigen Element (7,8) und dem Kranz (6) während des Schließens der Form (1) zu blockieren.

3. Form (1) für einen Reifen oder eine kreisringförmige Lauffläche eines Reifens nach einem der Ansprüche 1 und 2, die so ausgebildet ist, daß die zweite Anlagefläche (72,82) des kreisringförmigen Elements (7,8) und die entsprechende Anlagefläche (62) des Kranzes (6) kegelstumpfförmig sind, mit einem relativen Neigungswinkel zur Achse der Form in der Größenordnung von mindestens 16 Grad.

4. Form (1) für einen Reifen oder eine kreisringförmige Lauffläche eines Reifens nach einem der Ansprüche 1 bis 3, die so ausgebildet ist, daß das Abformen der radial innen liegenden Sohle des Reifens oder der kreisringförmigen Lauffläche für einen Reifen auf einem starren Kern erfolgt (4).

5. Verfahren zur Herstellung eines Reifens oder einer Lauffläche eines Reifens, das so beschaffen ist, daß man eine Form (1) nach einem der Ansprüche 1 bis 4 verwendet.

## Claims

1. Mould (1) for a tyre or for an annular tread of a tyre, comprising a plurality of sectors (2) which move radially for moulding the outside of said tread, the closing of said sectors (2) being effected by the axial displacement of a crown (6) which acts on frustoconical seats (21) of said sectors (2) placed radially to the outside, and, to permit retraction of the sectors (2) from their closing position in the mould (1), at least one annular element (7, 8), midway between said sectors (2) and said crown (6), which comprises a first, frustoconical, radially inner, support surface (71, 81) intended to be applied when the mould (1) is closed against the seats (21) of the sectors (2) with a wedging engagement and a second, frustoconical, radially outer, support surface (72, 82) intended to hold the support of a corresponding surface (62) of the crown (6) with a non-wedging engagement, said crown (6) being supported with a controlled axial force.

2. Mould (1) for a tyre or for an annular tread of a tyre according to claim 1, such that the annular element (7, 8) also comprises a third support surface (73, 83) intended to fit against a corresponding surface (63) of the crown (6) to block the relative axial displacements between the annular element (7, 8) and the crown (6) during the closing of the mould (1).

3. Mould (1) for a tyre or for an annular tread of a tyre according to one of claims 1 and 2, such that the second support surface (72, 82) of the annular element (7, 8) and the corresponding support surface (62) of the crown (6) are frustoconical with an angle of inclination relative to the axis of the mould of about 16 degrees minimum.

4. Mould (1) for a tyre or for an annular tread of a tyre according to one of claims 1 to 3, such that the moulding of the radially inner sole of the tyre or of the annular tread for a tyre is effected on a rigid core (4).

5. Procedure for manufacture of a tyre or a tread of a tyre, such that a mould (1) according to one of claims 1 to 4 is used.
